Europäisches Patentamt

European Patent Office

Office européen des brevets

(11) Publication number: **0 197 615**
**A1**

## EUROPEAN PATENT APPLICATION

(21) Application number: 86200590.7

(51) Int. Cl.⁴: **A22B 5/20**

(22) Date of filing: 07.04.86

(30) Priority: 11.04.85 NL 8501077

(43) Date of publication of application:
15.10.86 Bulletin 86/42

(84) Designated Contracting States:
AT BE CH DE FR GB IT LI LU NL SE

(71) Applicant: **Bruil, Dirk Johan**
**Zuivelweg 47**
**NL-7003 CB Doetinchem(NL)**

(72) Inventor: **Bruil, Dirk Johan**
**Zuivelweg 47**
**NL-7003 CB Doetinchem(NL)**

(74) Representative: **van der Beek, George Frans**
**et al**
**Nederlandsch Octrooibureau Johan de**
**Wittlaan 15 P.O. Box 29720**
**NL-2502 LS 's-Gravenhage(NL)**

(54) Apparatus for breaking loose the lower jaw from the head of a slaughtered animal.

(57) The invention relates to an apparatus for breaking loose the lower jaw from the head of a slaughtered animal. To this end the apparatus comprises a transport means (1) with a horizontal holding surface provided with one or more support surfaces (5,6) for determining the position of the head (4) in such a manner that the latter, lying on its side, has the upper jaw (7) in the upstream position in relation to the direction of movement and with a support (6) engaging between the jaws. Furthermore a device (3) is provided which can be moved in and out the space between the jaws and which can grip the inside of the lower jaw (8) and hold it up as the movement of the transport means proceeds. By this movement the lower jaw is removed from the head of the slaughtered animal.

## Apparatus for breaking loose the lower jaw from the head of a slaughtered animal

The present invention relates to an apparatus for breaking loose the lower jaw from the head of a slaughtered animal.

The need for such an apparatus has existed for a long time. Now that slaughterhouses are being increasingly mechanized and the various stages of the butcher's work are already to a greater or lesser extent automated, it is surprising that the lower jaw should still always be broken loose by hand from the head of a slaughtered animal. This is done by cutting through the parts of the joint and then pulling the upper and lower jaws apart by hand. Since this requires fairly considerable force and the work is done with fairly sharp tools in the cutting-through and removal of the joint tissue, as well as for pulling the jaws apart, there is a fairly great risk of injury to the butcher, while in addition this work is arduous.

The invention seeks to provide an apparatus for breaking loose the lower jaw from the head of a slaughtered animal.

This aim is achieved in that this apparatus comprises:

-a transport means having a horizontal holding surface provided with one or more support surfaces for determining the position of the head in such a manner that the latter, lying on it side, has its upper jaw in the upstream position in relation to the direction of movement, and with a support engaging between the jaws;

-and a device which is adapted to move into and out of the space between the jaws (the mouth) and which can grip the inside of the lower jaw and hold it up as the movement of the transport means proceeds.

In this way the disadvantages described above are overcome and partly automated separation of the lower jaw from the head of a slaughtered animal can be achieved. In addition, a saving of manpower, with very simple equipment, is made possible.

In one advantageous embodiment of the apparatus for breaking loose the lower jaw from the head of a slaughtered animal the support surfaces for the head are disposed on the transport means in such a manner that this head lies with the mouth directed towards one side edge of the transport means, while the device adapted to grip the lower jaw is placed next to this edge. A very simple arrangement of the transport means and of the device adapted to grip the lower jaw is thus achieved.

In another advantageous embodiment the support surfaces for the head hold the latter in a position in which the jaws lie at an acute angle to the direction of movement of the transport means. The device adapted to grip the lower jaw can thus easily move into and out of the space between the jaws.

In an advantageous embodiment the transport means is a turntable, so that a continuous movement can be achieved in a very simple manner.

In another advantageous embodiment the device gripping the lower jaw consists of a clamp adapted to act on the lower surface of, and cooperating with the part of the device gripping the lower jaw in the mouth. In this way the mouth is clamped fast in a simple manner.

In another advantageous embodiment the device gripping the lower jaw and provided with a clamp is rotatable about a vertical axis and is coupled to an operating mechanism which after the lower jaw has been broken loose swings the clamp together with the lower jaw to a position outside the transport means. In this way the detached lower jaw is discharged in a very simple manner.

According to another advantageous embodiment the turntable is provided with control cams which form part of a control system of the means for opening and closing the clamp and for swinging the clamp to-and-fro. This has the advantage that when the turntable is removed and refitted the adjustment of the apparatus is not lost. Its removal may be necessary for the purposes of maintenance and cleaning.

In another advantageous embodiment the transport means is provided with a control cam and the device for gripping the inner side of the lower jaw is adapted to swing about a vertical axis towards and away from the transport means, said cam being adapted to move said device, against the action of a spring, into and out of the path of a head, in such a manner that the device enters the mouth after the passage of the lower jaw. Mechanical control is thus provided for the device adapted to grip the lower jaw, with very simple construction but without any modification of its adjustment on the removal and refitting of the transport means.

The invention will be explained more fully below with reference to one example of embodiment, which is illustrated in the drawing, in which:

Figure 1 is a side view of a preferred embodiment of the invention;

Figure 2 is a top plan view of the embodiment shown in Figure 1 in the starting position;

Figure 3 shows the apparatus according to the embodiment shown in Figure 1, in a first intermediate position;

Figure 4 is a top plan view of the apparatus shown in Figure 1, in a second intermediate position;

Figure 5 is a side view of the apparatus in the position shown in Figure 4;

Figure 6 is a side view of the apparatus shown in Figure 1, in a third intermediate position Figure 7 is a side view of the apparatus shown in Figure 1, in a fourth intermediate position;

Figure 8 is a side view of the apparatus shown in Figure 1, in the last operating stage, and

Figure 9 shows diagrammatically the control of different components shown in the above Figures.

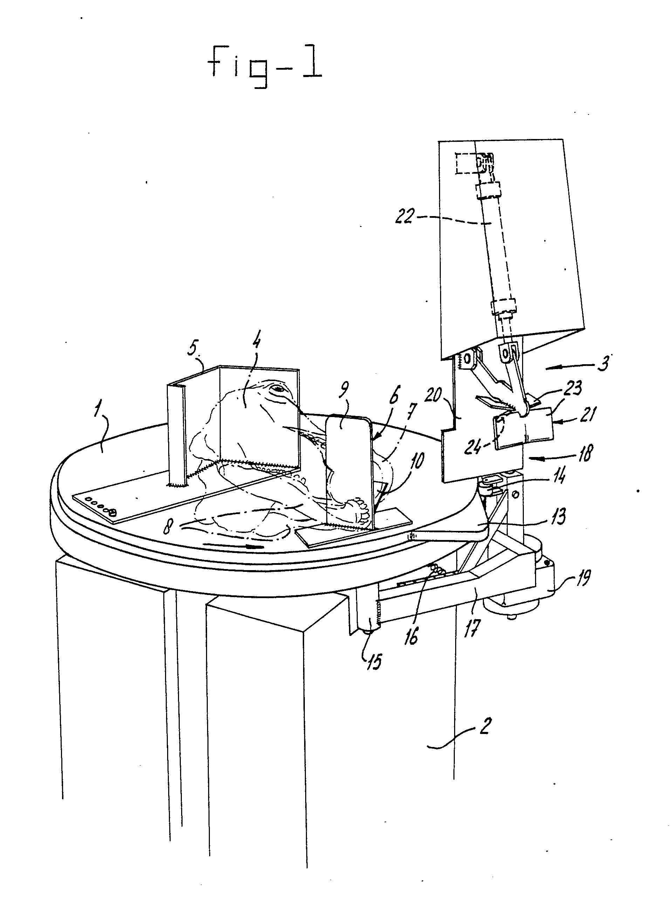

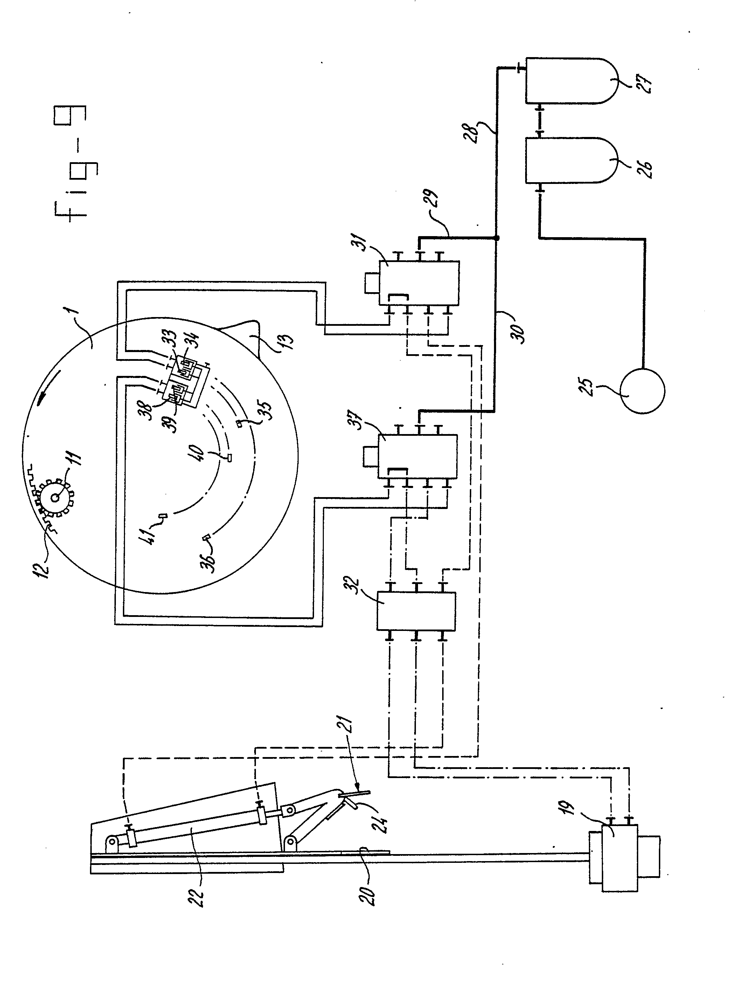

Figure 1 shows in perspective a turntable 1 rotatably fastened to a frame 2, on which a breaking arm 3 is hingedly mounted. The head 4 from which the jaw is to be broken away is disposed on the turntable 1. This head 4 lies with the neck end against a plate 5 bent into U-shape and is laid on its side on the turntable 1. When the head 4 is disposed on the turntable 1, it is arranged in such a manner that the upper jaw 7 and lower jaw 8 of the head are situated on different sides of a support 6. This support 6 consists of a plate 9 extending perpendicularly to the turntable, and of a plate 10 disposed obliquely thereto. When the upper jaw 7 of the head is disposed in the resulting wedge-shaped space between the plates 9 and 10, it will slide through the force of gravity against the plate 9. Since the mouth is naturally slightly open, the lower jaw 8 will then be situated some distance from the plate 9. A cam 13 is mounted on the turntable 1 which, as can be seen in Figure 9, can be driven by a motor 11 via an annular gear mounted on the turntable 1. A roller 14 mounted on the frame of the breaking arm 3 is adapted to roll on this cam 13. Since the breaking arm 3 is hinged at 15 to the frame 2, and since the roller 14 is pressed against the turntable by the force of the spring 16, the roller 14 will bear against the cam 13 and follow its contour, whereby the breaking arm 3 pivots inwards and outwards. An upper part 18 of the breaking arm is mounted for rotation on the hinged lower part 17 of the breaking arm 3. This upper part 18 can for example be driven by means of pneumatic motor 19 and a shaft (not shown) extending through the lower part 17 of the breaking arm. The upper part 18 of the breaking arm consists of a plate 20 and of a movable clamp 21 which is fastened thereon and which is operated by a ram. The clamp 21 has two clamp faces 23, which extend at an obtuse angle relative to one another, and a pin 24 extending in the middle between said faces.

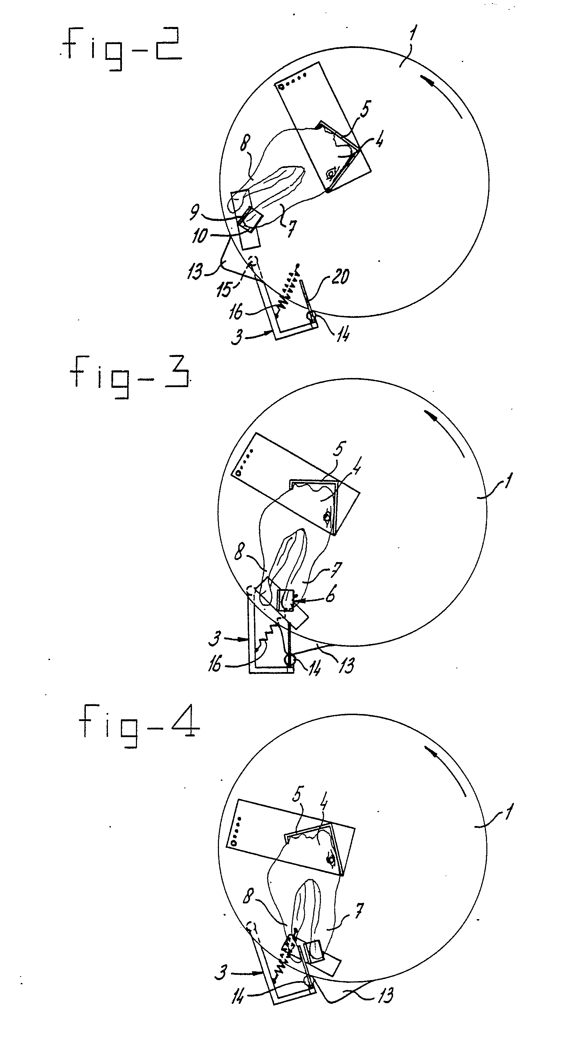

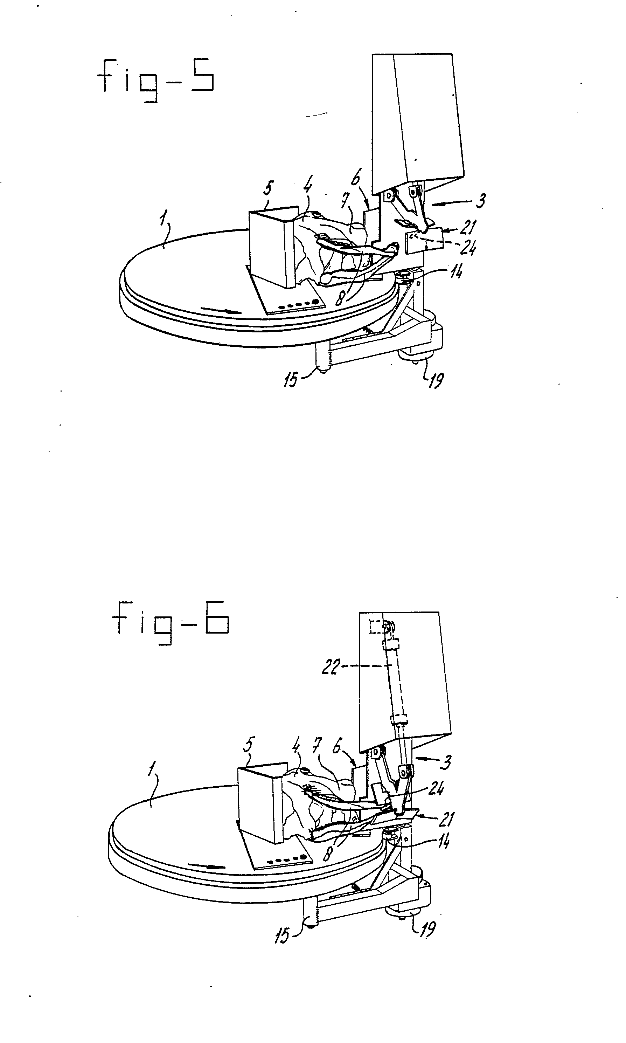

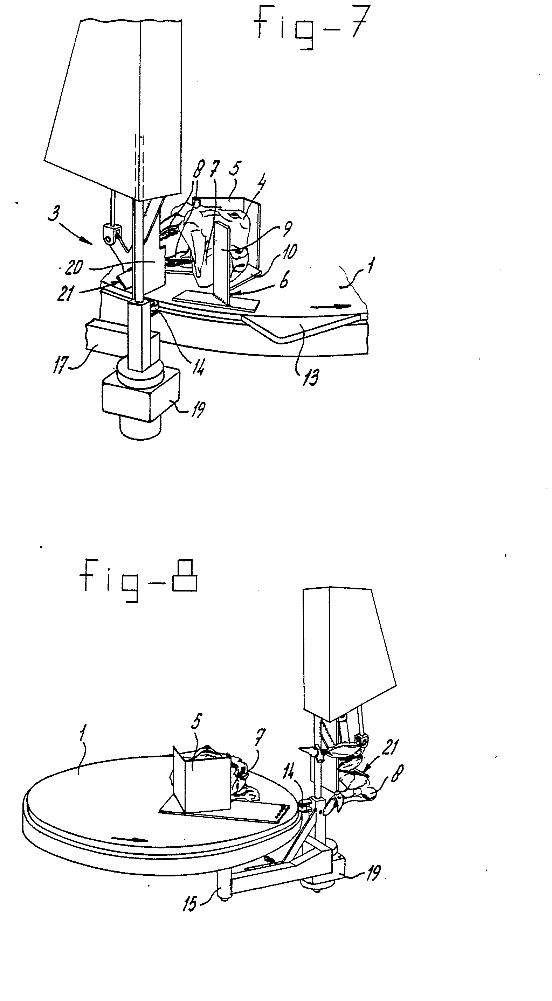

With the aid of the top plan view shown in Figures 2 to 4 and of the side view shown in Figures 5 to 8, the operation of the apparatus according to the invention will now be explained; for the sake of clarity the head is omitted in Figures 3 and 4. Figure 2 shows in top plan view the positions of the various parts of the apparatus shown in Figure 1. The roller 14 is situated a considerable distance from the cam 13, while the plate 20 of the breaking arm 3 is situated above the turntable 1. The roller 14 is pressed, pivoting about the point 15, against the edge of the turntable by the spring 16. The head 4 lies with its mouth slightly open on the support 6 and in the plate 5 bent into U-shape. When the turntable 1 turns further in the direction of the arrow 25, the roller 14, as shown in Figure 3, will roll along the cam 13, whereby the breaking arm 3 will be pivoted outwards and then, as shown in Figure 4, pivoted inwards again. This movement is necessary in order to prevent the plate 20 from coming into contact with the support 6. When the breaking arm 3 moves back towards the turntable, the plate 20 slides between the plate 9 and the lower jaw 8 of the head. This is likewise shown in side view in Figure 5. On the further movement of the turntable the position of the lower part of the breaking arm will remain unchanged in relation to the frame 2. Through the action of the ram 22, the clamp 21 is then moved downwards against the plate 20 of the breaking arm. The front edge of the lower jaw thus falls between the two oblique clamp faces 23, while the pin 24 falls into the space between the two half jawbones. This is shown in Figure 6. The lower jaw is thereby clamped fast against the plate 9, while the upper jaw is held fast by the support 6 and the U-shaped plate. On the further rotation of the turntable 1, during which the breaking arm 3 does not move, the mouth is further gradually opened, and finally the lower jaw is broken off from the head as is clear from fig. 7. The lower jaw 8 is now held fast only by the breaking arm 3, while the remainder of the head remains on the turntable. This remainder of the head 4 can be removed in the usual manner during the further rotation of the turntable 1. Figure 8 shows that through the turning of the upper part 18 of the breaking arm 3 the lower jaw 8, which is clamped between the plate 20 and the clamp 21, is pivoted away from the remainder of the head 4 and discharged in any manner known in the prior art. The upper part 8 of the breaking arm 3 is thereupon turned back to the position shown in Figure 1.

Figure 9 shows the pneumatic control of the upper part 18 of the breaking arm 3 and also of the ram 22. Compressed air, coming from an air source 25, is passed through the water separator 26 and oil atomizer 27. The pipe 28 then branches off into pipes 29 and 30. The ram 22 is operated by means of a control device 31, 32. This control device is operated by means of valves 33 and 34, which are situated under the turntable and which are controlled by cams 35 and 36 disposed on the lower face of the turntable. It may be observed that the turntable is shown as transparent in top plan view. Compressed air is similarly supplied by way of a pipe 30 to the control device 37, which in conjunction with the control device 32 controls the motor 19 pivoting the upper part 18 of the breaking arm 3. This control device 37 is operated by two valves 38 and 39 actuated by cams 40 and 41. These cams are likewise disposed on the lower face of the turntable. The control device 32 is provided in order to permit throttling in the desired manner of the amount of air supplied to the different components. Through the fastening of the cams 35, 36 and 40, 41 on the turntable it is ensured that on the removal of the turntable, for example for maintenance purposes or cleaning, the apparatus will not be out of adjustment when the turntable is subsequently refitted. The position of the gear of the motor 11 in relation to the annular gear 12 is immaterial in view of the fact that the motor 11 rotates continuously. Since in addition the cam 13 is fastened to the turntable, the movement of the breaking arm 3 will also not be thrown out of adjustment on the removal and refitting of the turntable.

It may be observed that only a preferred embodiment is described above, to which numerous modifications can be made without going beyond the scope or the principles of the invention. Thus, the apparatus may in particular be provided with feed and discharge means for the head and jaw parts. The use of such means is limited not so much by technical possibilities as by requirements in respect of the accessibility of the different parts where hygiene is concerned.

## Claims

1. Apparatus for breaking loose the lower jaw from the head of a slaughtered animal, characterized in that it comprises:

-a transport means having a horizontal holding surface provided with one or more support surfaces for determining the position of the head in such a manner that the latter, lying on its side, has its upper jaw in the upstream position in relation to the direction of movement, and with a support engaging between the jaws;

-and a device which is adapted to move into and out of the space between the jaws (the mouth) and which can grip the inside of the lower jaw and hold it up as the movement of the transport means proceeds.

2. Apparatus according to Claim 1, characterized in that the support surfaces for the head are disposed on the transport means in such a manner that the head lies with the mouth directed towards one side edge of the transport means and the device adapted to grip the lower jaw is placed next to this edge.

3. Apparatus according to Claim 1 or 2, characterized in that the support surfaces for the head hold the latter in a position in which the jaws lie at an acute angle to the direction of movement of the transport means.

4. Apparatus according to Claims 1 to 3, characterized in that the transport means is a turntable.

5. Apparatus according to Claims 1 to 4, characterized in that the device gripping the lower jaw consists of a clamp adapted to act on the lower surface of, and cooperating with, the part of the device gripping the lower jaw in the mouth.

6. Apparatus according to Claims 1 to 5, characterized in that the device gripping the lower jaw and provided with a clamp is rotatable about a vertical axis and is coupled to an operating mechanism which after the lower jaw has been broken loose swings the clamp together with the lower jaw to a position outside the transport means.

7. Apparatus according to Claim 6, characterized in that the turntable is provided with control cams which form part of a control system of the means for opening and closing the clamp and for swinging the clamp to-and-fro.

8. Apparatus according to Claims 1 to 7, characterized in that the transport means is provided with a control cam and the device for gripping the inner side of the lower jaw is adapted to swing about a vertical axis towards and away from the transport means, said cam being adapted to move said device, against the action of a spring, into and out of the path of a head, in such a manner that the device enters the mouth after the passage of the lower jaw.

0 197 615

# Fig-1

0 197 615

fig-2

fig-3

fig-4

fig-5

1 5 4 6 7 3 21 24 14 8 15 19

fig-6

22 5 4 7 6 3 24 21 14 1 8 15 19

0 197 615

Fig-7

3
8 7 5
4
9
20
10
21
6
1
17
14
13
19

Fig-8

1
5
7
21
8
14
15
19

fig-9

0 197 615

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 084 378  (MACY)<br><br>-----  | | A 22 B  5/20 |

**TECHNICAL FIELDS SEARCHED (Int. Cl.4)**

A 22 B
A 22 C

The present search report has been drawn up for all claims

| Place of search | Date of completion of the search | Examiner |
|---|---|---|
| THE HAGUE | 01-07-1986 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82